# EUROPEAN PATENT SPECIFICATION

(11) **EP 2 718 004 B1**
(45) Date of publication and mention of the grant of the patent: **21.09.2016**
(21) Application number: 12727983.4
(22) Date of filing: 07.06.2012
(51) Int. Cl.: B01J 19/00, B01L 3/00

(54) **FLUIDIC MODULE SUSPENSION SYSTEM AND RESULTING REACTOR**
FLUIDIKMODULAUFHÄNGUNGSSYSTEM UND RESULTIERENDE REAKTOR
SYSTÈME DE SUSPENSION DE MODULES FLUIDIQUES ET RÉACTEUR RÉSULTANT

(30) Priority: 07.06.2011 US 201161494409 P
(43) Date of publication of application: 16.04.2014
(73) Proprietor: Corning Incorporated, Corning, New York 14831 (US)
(72) Inventor: GUIDAT, Roland, F-77940 Blennes (FR); MAURY, Alexis, F-77570 Chateau (FR)
(74) Representative: Kingsbury, Oliver William
(86) International application number: PCT/US2012/041190
(87) International publication number: WO 2012/170594

(56) References cited:
- WO-A1-00/62919
- WO-A1-03/026788
- WO-A1-2004/026460
- WO-A2-2010/132412

## Description

### FIELD

This disclosure relates to the assembly of fluidic reactors comprised of individual fluidic modules, such as continuous flow reactors so comprised as to provide robust fluidic interconnection and robust mechanical support for the individual fluidic modules, and more particularly to provide robust support together with ease of access while allowing for thermal expansion of fluid connections between modules.

### BACKGROUND

Continuous-flow reactors can be useful for chemical production, particularly those based on microreaction technology. Such reactors generally take the form of an assembly of a plurality of fluidic modules (or, interchangeably, "microfluidic modules") mounted within a mechanical frame, with fluidic connections between the modules. Each fluidic module typically comprises 2 fluidic circuits, 1 dedicated to reactants and 1 dedicated to thermal control fluid, although the use of additional circuits of either type is possible. Characteristic minimum cross-sectional dimensions of reactant fluid passages are typically in the sub-millimeter to 1 or 2 centimeter range, providing the heat- and mass-transfer advantages available at such small scales.

In many applications, good resistance to harsh chemicals is desirable, and fluidic modules are made of glass material, or of other corrosion resistant materials, such as ceramics.

This technology offers advantages compared to conventional batch technology, from a chemical reaction point of view: better mixing efficiency, better volumetric heat transfer coefficient, better residence time distribution, and a low hold-up, reducing drastically any consequences of a loss thermal control, if that should ever happen.

In continuous flow reactors, the use of materials less sensitive to chemical corrosion than metals, such as glass or silicon carbide ceramic, allows for performance of a broad range of different chemical reactions. Accordingly, the connections between fluidic modules in continuous flow reactors should be also metal-free, in order to offer a complete reactor system able to withstand chemical corrosion.

The most common way to assemble fluidic module is to perform a stacking of several plates or fluidic modules, avoiding the need of connectors between two adjacent plates, and requiring only gaskets, or even forming some form of permanent seal. Unfortunately, in the case of non-permanent stacking of glass microfluidic layers, making glass plates tight requires additional gasket supports, as grooves cannot be machined on the glass surface without negative consequences, and the strength required to make a stack of gaskets tight is generally not compatible with the allowable stress on glass.

Permanent stacking (sealing of glass to glass) may be a nice way to solve the issue, but is typically limited to a certain quantity of plates, and connectors, however reduced in number, would be still needed. Permanent stacking is also more appropriate for production reactors where the product is the same over the long term, so that the reactor configuration may be fixed. It is however not acceptable for lab and pilot scale reactions, where changes in the fluidic module arrangements needs to be performed easily in order to optimize the equipment for the process or reaction at hand. In the case of manufacturing where products are varied over time so that there is a need for flexibility and the reactor can be a multipurpose reactor, permanent stacking may not be desirable.

There is thus a need to have connection piping available between adjacent fluidic modules, regardless of whether individual modules are themselves comprised of one or many layers.

Metal free or corrosion resistant piping is well known in the chemical industry and widely available, in the form of glass-lined piping or metallic piping with an internal PTFE layer, for example. Such piping is not generally available below a diameter of ½" (below an external diameter of 21,3 mm). Because of the relatively large fluid volumes that would reside in the connection piping at these diameters, such commercially available stock is not useful for most microreaction applications.

PTFE piping is available on the market in smaller diameters (such as 1/8", that is, external diameter of 3.2 mm), but, the range of operating pressure is unacceptably limited for many applications, particularly when combined with operating temperature above 50°C. For this reason, a thicker piping formed of PFA was used, allowing for operating conditions of up to 150°C and 18 bar. Because the wall thickness of this piping is higher to withstand higher pressures, even when the mechanical stiffness of the material is altered due to high temperature, the connector is no longer flexible, but rigid or semi-rigid. This rigidity leads to two main constraints:

During operation at high temperature, the thermal elongation of the connector is not fully compensated by the relatively low flexibility of the piping. Therefore large mechanical stresses can be applied to the fluidic module, having a negative impact on the lifetime of the equipment, and possibly leading to breakage.

The thermal expansion coefficient of PFA can range from around 1.2 to 2.5x10⁻⁴/°C over temperatures in the range from 20-200°C, with an effective average over temperatures of interest of about 1.6 x 10⁻⁴/°C. In other words, a temperature increase of 100°C can lead to a length increase of 1.6 mm for a connector with an initial length of only 100 mm.

Similarly, during maintenance operations or re-configuration of a reactor, there is a need either to bend the connector piping or to displace adjacent fluidic module(s) in order to release the connector piping from the hardware coupling it to a port on the surface of a microfluidic module. As there is little or no flexibility in the connector piping, the replacement of a fluidic module or even of a gasket can require undoing several fluid interconnections, which is time consuming, and may cause the need for additional gaskets to be replaced.

It would be desirable to have a reactor assembly that overcomes both excessive stress concentration from thermal expansion of piping and excessive difficulty in assembly and disassembly, especially in the case of maintenance, replacement, or reconfiguration of modules after the first assembly.

WO 2010 describes a modular reactor and system with a plurality of glass, glass-ceramic or ceramic microfluidic devices (microstructures) building up to form a modular reactor. Connection and interconnection arrangements are described.

### SUMMARY

According to one aspect of the present disclosure, there is provided a continuous flow modular reactor according to claim 1.

The present disclosure gives flexibility to the assembly of fluidic modules in a modular continuous flow reactor by replacing rigid support of each module by a moving assembly with a double axis of rotation, allowing both a rotation of the fluidic module an a parallel displacement of the hanging device and the module itself.

Accordingly, if at least one external connection to the reactor has some freedom to move (a few degrees of angular displacement, and one or two millimeters in axial displacement, for example), each fluidic module of the reactor will gently move in such a position that the residual stress due to thermal expansion of fluidic connections within the module (the chemically resistant piping between modules) is very low.

Even in the case if both ends are fixed, the thermal expansion will be partly absorbed by the flexibility of the piping , partly by the slight rotation of the fluidic modules, allowing, combined with the free positioning of the handling device, an increase of the distance between the connection points, leading to a low residual mechanical stress.

In case of maintenance, the fluidic modules on one side of the part to be replaced can be easily and gently pushed away (after having disconnected the reactor from the fix point if any), allowing an easy dismounting of the connector without touching the other parts of the reactor. Additionally, the fluidic modules are hanging and not being supported by the bottom, leading to an automatic position of the parts just by their weight and eventually any constraints due to the piping, leading automatically to a position of equilibrium of all the applied strength, and a lower resulting stress.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiment(s), and together with the description serve to explain principles and operation of the various embodiments.

### BRIEF DESCRIPTION OF THE DRAWINGS

Figure 1 is an elevation view of one embodiment of a modular continuous flow reactor according to the present disclosure;
Figure 2 is an elevation view of another embodiment of a modular continuous flow reactor similar to that of Figure 1;
Figure 3 is a diagrammatic elevation view of an embodiment of the present disclosure;
Figure 4 is a diagrammatic elevation view of one aspect of the embodiment of Figure 3;
Figure 5 is diagrammatic elevation view of another aspect of the embodiment of Figure 3;
Figure 6 is a diagrammatic elevation view of yet another aspect of the embodiment of Figure 3;
Figure 7 is a diagrammatic elevation view of an alternative aspect of the present disclosure; and
Figure 8 is a diagrammatic elevation view of yet another alternative aspect of the present disclosure.

### DETAILED DESCRIPTION

Reference will now be made in detail to various embodiment(s), an examples of which is/are illustrated in the accompanying drawings. Whenever possible, the same reference numerals will be used throughout the drawings to refer to the same or like parts.

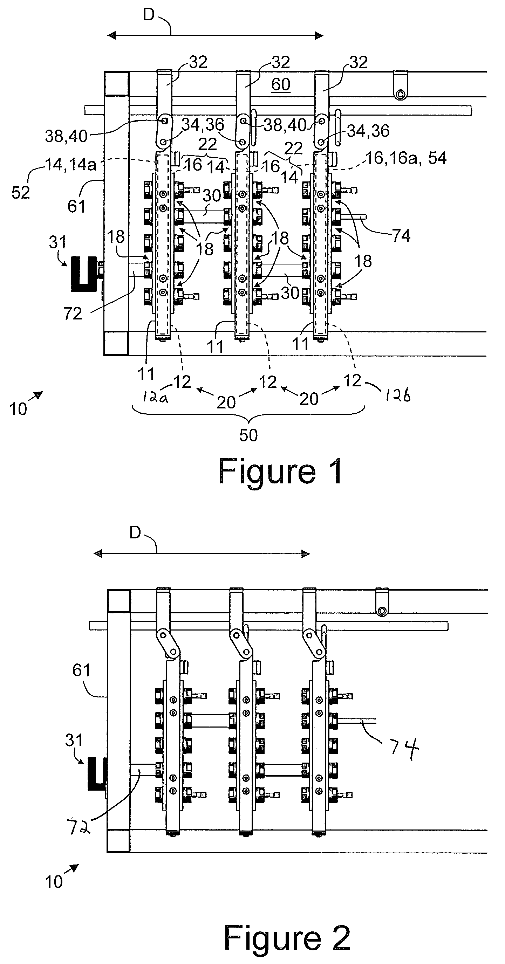

Figure 1 is a side elevation view of a modular continuous flow reactor according to one aspect of the present disclosure. As shown in Figure 1, a modular reactor 10 includes a plurality of planar fluidic modules 12, which may each be supported within a frame 11. Each module 12 has two opposing major generally planar external surfaces 14, 16 with one or more fluid ports 18 on each said major surface (with fluid ports at the indicated locations of reference characters 18, but not visible in the side view of Figure 1.) The fluid ports 18 provide fluidic access to one or more fluid channels (not shown in this figure) inside the modules 12. The modules 12 are arranged in a spaced-apart horizontally extending row 50 extending in a direction D with the major surfaces 14, 16 of the modules 12 oriented generally parallel to each other such that any pair 20 of adjacent modules in said row 50 has an associated pair 22 of facing major surfaces 16, 14 one on each module 12. A plurality of rigid or semi-rigid fluid connectors 30 are each positioned between first and second surfaces 14, 16 of a pair 22 of facing major surfaces of the modules 12. The rigid or semi-rigid connectors 30 fluidically and mechanically join at least one fluid port 18 on the first surface 16 of the pair of facing surfaces to at least one other fluid port 18 on the second surface 14 of the pair 22 of facing surfaces.

The reactor 10 further comprises a horizontally extending support structure 60 extending above the horizontally extending row 50 of modules 12 and in the direction D, and one or more hangers 32 each supporting one of the plurality of fluidic modules 12 from the horizontally extending support structure 60. The support structure 60 may be a part of a larger frame structure 61, as shown in Figure 1.

At least a plurality of the one or more hangers 32 each comprise a first rotary joint 34 having a first axis 36 positioned above the respective module 12 and below the horizontally extending support structure 60, with the first axis 36 extending in a horizontal direction orthogonal to the direction D in which the row 50 extends. Desirably, at least a plurality of the hangers 32 each comprise a second rotary joint 38 with a second axis 40 positioned above the respective module 12 and below the horizontally extending support structure 60, with the second axis 40 also extending in a horizontal direction orthogonal to the direction D in which the row 50 extends.

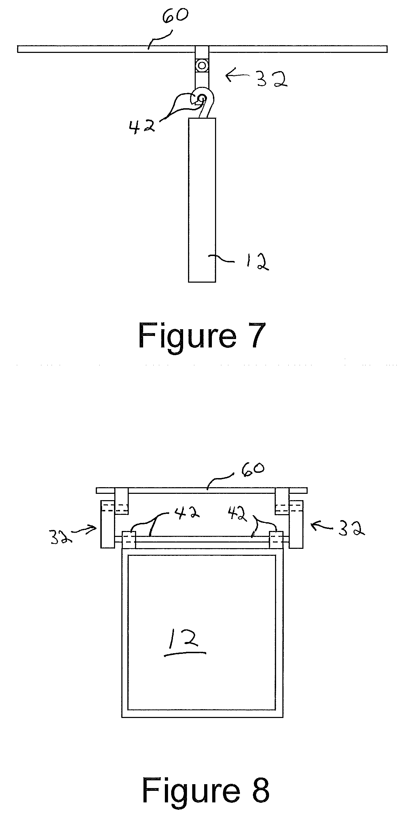

According to alternative aspects of the present disclosure, planar fluidic modules 12 useful in the context of the present disclosure may comprises modules 12 formed of one or sub-modules permanently joined into a larger single module, or one or more sub-modules reversibly joined into a larger single module. According to other alternative aspects, each second rotary joint 38, or each first rotary joint 34, may comprise one or more pin and hook pairs 42, such as is shown in embodiment illustrated in Figure 7. The one or more pin and hook pairs 42 are thus readily disengaged to disassemble or assemble the first or second rotary joint 34, 38 so that individual fluidic modules 12 may be removed or inserted from the reactor 10 without removing any adjacent modules 12.

The hook and pin pair may face externally as in the embodiment of Figure 7, or alternatively may lie internally of the remaining structure of the hanger(s) 32, as in the embodiment of Figure 8.

As noted in the discussion above, the plurality of rigid or semi-rigid fluid connectors 30 are desirably plastic fluid connectors, particularly desirably PFA fluid connectors or fluid connectors formed of thick-walled PFA piping, making for rigid or semi-rigid connectors. Materials more rigid than PFA may also be employed

As may also be seen in the embodiment of Figure 1, a first outward surface 52 of the reactor 10 may be identified as corresponding to an outward facing surface 14a of the two opposing major generally planar external surfaces 14, 16 of a first fluidic module 12a in the row 50, and a second outward surface 54 may be identified as corresponding to an outward facing surface 16a of the two opposing major generally planar external surfaces 14, 16 of a last fluidic module 12b in the row 50. According to one additional alternative aspect of the present disclosure, the reactor 10 further comprises first and second external fluid connectors 72, 74, with the first external fluid connector 72 fluidically coupled to a port 18 on the first outward surface 52, and the second external fluid connector 74 fluidically coupled to a port 18 on the second outward surface 54, wherein one of the first and second external fluid connectors 72, 74 is a flexible or otherwise-moveable fluid connector, and the other has a fixed position. The effects of these alternatives may be seen, for example, in the embodiments represented in Figures 1 and 2. In Figure 1, a clamp 31 or other fluidic coupling component attached to first external fluid connector 72 is mechanically free to float, at least leftwards and rightwards in the figure, and possibly also very slightly up and down or in a pivoting sense, such that first fluidic module 12a has been permitted to displace slightly to the left, as shown in Figure 1, to compensate for thermal expansion of the fluid connectors 30 (and any other expanding components). In Figure 2, in contrast, the clamp 31 and the associated first external fluid connector 72 have been pulled inward toward the reactor 10 (to the right in Figure 2) as a result of contraction of the fluid connectors 30 (and any other components). Both Figure 1 and Figure 2, in this respect, assume a fixed position either for the second external fluid connector 74 (as in Figure 1), or for some fixture, not shown, to which fluid connector 74 is connected.

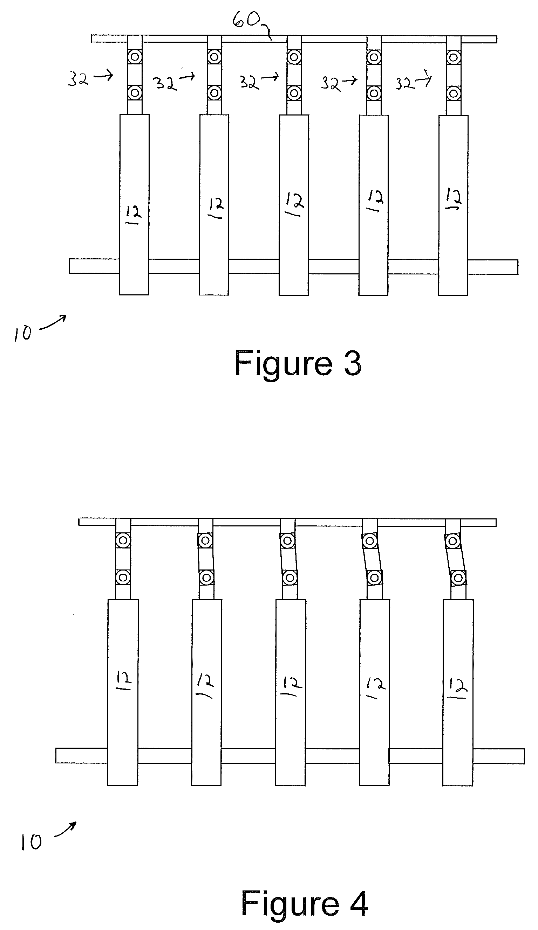

Figure 3 shows the reactor 10 and support system for the fluidic modules 12 in diagrammatic form. As can be seen from Figures 1-3, the fluidic modules 12, according to the present disclosure, are no longer fixed, but hanging from a horizontally extending support structure 60. The hanger 32 is central to the advantages achieved by the present disclosure, and a significant aspect of the hanger 32 is that the hanger 32 includes at least one rotary joint or two.

In Figure 4 one can see what happens if one end of the fluidic path of the reactor 10 is fixed (the left side of the figure, in the case of Figure 4), and the other free (the right side, in this case: the free end will move. It is not so obvious in the figure, but the plates on the right of Figure 4 are also at a slightly higher position than in the original position as in Figure 3. The height increase is small enough that stresses due to rotation are low.

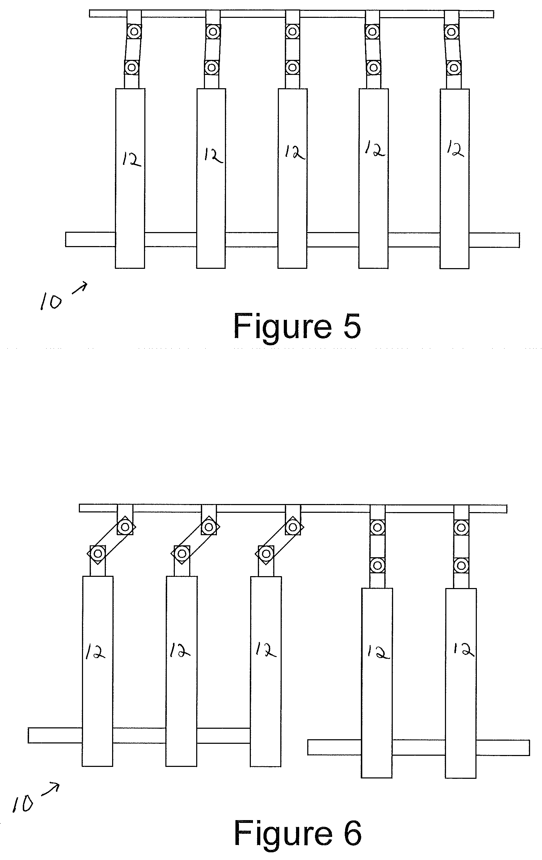

In Figure 5 is displayed the variation of the position of 5 modules 12 in a reactor 10 with both ends free to move. In this case, all modules 12 move gently around the modules 12 in the middle to cope with thermal expansion, leading non-significant additional stresses. Additionally, if the modules 12 can rotate on two axes as shown, rather than one, then the modules 12 can remain parallel, and the connectors between them can stay parallel to their original position, reducing the stress on the connectors and seals. Instead both ends are fixed, all modules lift to allow a global length increase in the left-to-right fluid path, by allowing it to curve upward in the middle. In that case, there is more rotational stress induced, but still small for relatively small displacements. Both axes of rotation in the hangers are needed in order to allow the formation of such an upward bending curve. Of course, the drawings here are only a schematic representation; it does not envisioned that the modules will take exactly the positions shown. However, it is a good approximation of what will happen.

In contrast to both ends being free, as in the example of Figure 5, if both ends are blocked, the line of fluid connectors 30 and 72 may expand, if the expansion is sufficiently small, into a curved line, bending away from the original straight one. Particularly for this purpose it is desirable if the hanger of each module can rotate on two different axes of rotation.

Another significant and desirable aspect of the present disclosure is ease of maintenance and access to the individual modules. In order to dismount a fluidic connector, one generally has to unscrew a bolt that presses an O-ring or other gasket between the respect fluid connector 30 and the surface 14 or the surface 16 of respective module 12. This can be done easily without changing the position of the modules 12, but one then needs then to increase the distance between the respective two adjacent modules 12, because the fluid connector 30 is generally inserted concentrically into the clamp where the bolt is fixed. As shown in Figure 6, this increase in distance may be accomplished easily within the reactor 10 of the present disclosure, because an entire group of modules 12, still joined together by fluidic connectors 30, can simply be swung upward and away (to the left in this case). This easy maintenance is made possible, to some degree, either if the modules 12 are mounted with one degree of rotation on one axis or two degrees of rotation on two separate axes. The rotation on two axes makes the job much easier as it requires less effort, and it does not require any bending the fluid connectors 30 between the modules 12 that are moved, which bending could have an adverse effect on the tightness of the seals between the moved modules 12 and the associated fluid connectors 30.

Additionally, in a particular embodiment, having at least one of the rotary joints be in the form of a hook makes it even easier to perform maintenance or reconfiguration of a reactor.

The methods and/or devices disclosed herein are generally useful in performing any process that involves mixing, separation, extraction, crystallization, precipitation, or otherwise processing fluids or mixtures of fluids, including multiphase mixtures of fluids- and including fluids or mixtures of fluids including multiphase mixtures of fluids that also contain solids-within a microstructure. The processing may include a physical process, a chemical reaction defined as a process that results in the interconversion of organic, inorganic, or both organic and inorganic species, a biochemical process, or any other form of processing. The following non-limiting list of reactions may be performed with the disclosed methods and/or devices: oxidation; reduction; substitution; elimination; addition; ligand exchange; metal exchange; and ion exchange. More specifically, reactions of any of the following non-limiting list may be performed with the disclosed methods and/or devices: polymerisation; alkylation; dealkylation; nitration; peroxidation; sulfoxidation; epoxidation; ammoxidation; hydrogenation; dehydrogenation; organometallic reactions; precious metal chemistry/ homogeneous catalyst reactions; carbonylation; thiocarbonylation; alkoxylation; halogenation; dehydrohalogenation; dehalogenation; hydroformylation; carboxylation; decarboxylation; amination; arylation; peptide coupling; aldol condensation; cyclocondensation; dehydrocyclization; esterification; amidation; heterocyclic synthesis; dehydration; alcoholysis; hydrolysis; ammonolysis; etherification; enzymatic synthesis; ketalization; saponification; isomerisation; quaternization; formylation; phase transfer reactions; silylations; nitrile synthesis; phosphorylation; ozonolysis; azide chemistry; metathesis; hydrosilylation; coupling reactions; and enzymatic reactions.

## Claims

1. A continuous flow modular reactor (10) comprising:
a plurality of planar fluidic modules (12), each module (12) being a micro fluidic module having two opposing major generally planar external surfaces (14, 16) with one or more fluid ports (18) on each said major surface providing fluidic access to one or more fluid channels within the module (12), the modules (12) arranged in a spaced-apart horizontally extending row (50) extending in a direction (D) with the major surfaces (14, 16) of the modules (12) oriented generally parallel to each other such that any pair (20) of adjacent modules in said row (50) has an associated pair (22) of facing major surfaces (24, 26) one on each module;
a plurality of rigid or semi-rigid fluid connectors (30) each positioned between first and second surfaces (24, 26) of a pair (22) of facing major surfaces of the modules (12) and fluidically and mechanically joining at least one fluid port (18a) on the first surface (24) of the pair of facing surfaces to at least one other fluid port (18b) on the second surface (26) of the pair (22) of facing surfaces;
a horizontally extending support structure (60) extending above the horizontally extending row (50) of modules (12) and in the direction (D); and
one or more hangers (32) each supporting one of the plurality of fluidic modules (12) from the horizontally extending support structure (60);
**characterized in that** at least a plurality of the one or more hangers (32) each comprises a first rotary joint (34) having a first axis (36) positioned above the respective module (12) and below the horizontally extending support structure (60), the first axis (36) extending in a horizontal direction orthogonal to the direction (D) in which the row (50) extends.

2. The reactor (10) according to claim 1 wherein the plurality of planar fluidic modules (12) comprises modules (12) formed of one or sub-modules (13) permanently joined into a larger single module (12).

3. The reactor (10) according to claim 1 wherein the plurality of planar fluidic modules (12) comprises modules formed of one or more sub-modules (13) reversibly joined into a larger single module (12).

4. The reactor (10) according to any of claims 1-3 further **characterized in that** at least a plurality of the hangers (32) each comprise a second rotary joint (38) with a second axis (40) positioned above the respective module (12) and below the horizontally extending support structure (60), the second axis (40) also extending in a horizontal direction orthogonal to the direction (D) in which the row (50) extends.

5. The reactor (10) according to claim 4 wherein each said second rotary joint (38) comprises one or more pin and hook pairs (42), such that the one or more pin and hook pairs (42) may be readily disengaged to disassemble the second rotary joint (38).

6. The reactor (10) according to any of claims 1-4 wherein each said first rotary joint (34) comprises one or more pin and hook pairs (42), such that the one or more pin and hook pairs (42) may be readily disengaged to disassemble the first rotary joint (34).

7. The reactor (10) according to any of claims 1-6 wherein the plurality of rigid or semi-rigid fluid connectors (30) are plastic fluid connectors.

8. The reactor (10) according to any of claims 1-7 wherein the plurality of rigid or semi-rigid fluid connectors (30) are rigid fluid connectors.

9. The reactor (10) according to any of claims1-8 wherein the horizontally extending row (50) has a first outward surface (52) corresponding to an outward facing surface (14a) of the two opposing major generally planar external surfaces (14, 16) of a first fluidic module (12a) in the row (50), and a second outward surface (54) corresponding to an outward facing surface (16a) of the two opposing major generally planar external surfaces (14, 16) of a last fluidic module (12b) in the row (50), the reactor (10) further comprising first and second external fluid connectors (72, 74), the first external fluid connector (72) fluidically coupled to a port (18a) on the first outward surface (52), the second external fluid connector (74) fluidically coupled to a port (18b) on the second outward surface (54), wherein one of the first and second external fluid connectors (72, 74) is a flexible or otherwise-moveable fluid connector, and the other has a fixed position.

10. The reactor (10) according to any of claims1-7 wherein the horizontally extending row (50) has a first outward surface (52) corresponding to an outward facing surface (14a) of the two opposing major generally planar external surfaces (14, 16) of a first fluidic module (12a) in the row (50), and a second outward surface (54) corresponding to an outward facing surface (16b) of the two opposing major generally planar external surfaces (14, 16) of a last fluidic module (12b) in the row (50), the reactor (10) further comprising first and second external fluid connectors (72, 74), the first external fluid connector (72) fluidically coupled to a port (18a) on the first outward surface (52), the second external fluid connector (74) fluidically coupled to a port (18b) on the second outward surface (54), wherein the first and second external fluid connectors (72, 74) both have a fixed position.

## Patentansprüche

1. Kontinuierlicher modularer Durchflussreaktor (10), aufweisend:
eine Mehrzahl von ebenflächigen Fluidikmodulen (12), wobei jedes Modul (12) ein Mikrofluidikmodul mit zwei gegenüberliegenden großen, im Allgemeinen ebenflächigen äußeren Flächen (14, 16) ist, wobei einer oder mehrere Fluidanschlüsse (18) auf jeder großen Fläche fluidischen Zugang zu einem oder mehreren Fluidkanälen in dem Modul (12) bereitstellen, wobei die Module (12) voneinander beabstandet in einer sich horizontal erstreckenden Reihe (50) angeordnet sind, die sich in einer Richtung (D) erstreckt, wobei die großen Flächen (14, 16) der Module (12) im Allgemeinen parallel zueinander ausgerichtet sind, sodass jedes Paar (20) von aneinander angrenzenden Modulen in der Reihe (50) ein zugehöriges Paar (22) von einander zugewandten großen Flächen (24, 26), jeweils eine auf jedem Modul hat;
eine Mehrzahl von starren oder halbstarren Verbindungsstücken (30), die jeweils zwischen ersten und zweiten Flächen (24, 26) eines Paars (22) von einander zugewandten großen Flächen der Module (12) positioniert sind und fluidisch und mechanisch mindestens einen Fluidanschluss (18a) auf der ersten Fläche (24) des Paars von einander zugewandten Flächen mit mindestens einem anderen Fluidanschluss (18b) auf der zweiten Fläche (26) des Paars (22) von einander zugewandten Flächen verbinden;
eine sich horizontal erstreckende Tragstruktur (60), die sich über der sich horizontal erstreckenden Reihe (50) der Module (12) und in der Richtung (D) erstreckt; und
eine oder mehrere Halterungen (32), die jeweils eines von der Mehrzahl von Fluidikmodulen (12) von der sich horizontal erstreckenden Tragstruktur (60) tragen;
**dadurch gekennzeichnet, dass** mindestens eine Mehrzahl der einen oder mehreren Halterungen (32) jeweils eine erste Drehverbindung (34) mit einer ersten Achse (36) aufweist, die über dem jeweiligen Modul (12) und unter der sich horizontal erstreckenden Tragstruktur (60) positioniert ist, wobei sich die erste Achse (36) in einer horizontalen Richtung orthogonal zu der Richtung (D) erstreckt, in der sich die Reihe (50) erstreckt.

2. Reaktor (10) nach Anspruch 1, wobei die Mehrzahl der ebenflächigen Fluidikmodule (12) Module (12) aufweist, die aus einem oder Untermodulen (13) gebildet werden, die permanent zu einem größeren einzelnen Modul (12) verbunden sind.

3. Reaktor (10) nach Anspruch 1, wobei die Mehrzahl der ebenflächigen Fluidikmodule (12) Module aufweist, die aus einem oder mehreren Untermodulen (13) gebildet werden, die reversibel zu einem größeren einzelnen Modul (12) verbunden sind.

4. Reaktor (10) nach einem der Ansprüche 1 bis 3, ferner **dadurch gekennzeichnet, dass** mindestens eine Mehrzahl der Halterungen (32) jeweils eine zweite Drehverbindung (38) mit einer zweiten Achse (40) aufweist, die über dem jeweiligen Modul (12) und unter der sich horizontal erstreckenden Tragstruktur (60) positioniert ist, wobei sich die zweite Achse (40) ebenfalls in einer horizontalen Richtung orthogonal zu der Richtung (D) erstreckt, in der sich die Reihe (50) erstreckt.

5. Reaktor (10) nach Anspruch 4, wobei jede zweite Drehverbindung (38) ein oder mehrere Paare von Stift und Haken (42) aufweist, sodass das eine oder die mehreren Paare von Stift und Haken (42) leicht losgelöst werden können, um die zweite Drehverbindung (38) zu demontieren.

6. Reaktor (10) nach einem der Ansprüche 1 bis 4, wobei jede erste Drehverbindung (34) ein oder mehrere Paare von Stift und Haken (42) aufweist, sodass das eine oder die mehreren Paare von Stift und Haken (42) leicht losgelöst werden können, um die erste Drehverbindung (34) zu demontieren.

7. Reaktor (10) nach einem der Ansprüche 1 bis 6, wobei die Mehrzahl von starren oder halbstarren Fluidverbindungsstücken (30) Kunststoff-Fluidverbindungsstücke sind.

8. Reaktor (10) nach einem der Ansprüche 1 bis 7, wobei die Mehrzahl von starren oder halbstarren Fluidverbindungsstücken (30) starre Fluidverbindungsstücke sind.

9. Reaktor (10) nach einem der Ansprüche 1 bis 8, wobei die sich horizontal erstreckende Reihe (50) eine erste nach außen gerichtete Fläche (52) hat, die einer nach außen gewandten Fläche (14a) der zwei gegenüberliegenden großen, im Allgemeinen ebenflächigen äußeren Flächen (14, 16) eines ersten Fluidikmoduls (12a) in der Reihe (50) entspricht, und eine zweite nach außen gerichtete Fläche (54), die einer nach außen gewandten Fläche (16a) der zwei gegenüberliegenden großen, im Allgemeinen ebenflächigen Flächen (14, 16) eines letzten Fluidikmoduls (12b) in der Reihe (50) entspricht, wobei der Reaktor (10) ferner erste und zweite externe Fluidverbindungsstücke (72, 74) aufweist, wobei das erste externe Fluidverbindungsstück (72) fluidisch mit einem Anschluss (18a) auf der ersten nach außen gerichteten Fläche (52) verbunden ist, das zweite externe Fluidverbindungsstück (74) fluidisch mit einem Anschluss (18b) auf der zweiten nach außen gerichteten Fläche (54) verbunden ist, wobei eines der ersten und zweiten externen Fluidverbindungsstücke (72, 74) ein biegsames oder anderweitig bewegliches Fluidverbindungsstück ist und das andere eine feststehende Position hat.

10. Reaktor (10) nach einem der Ansprüche 1 bis 7, wobei die sich horizontal erstreckende Reihe (50) eine erste nach außen gerichtete Fläche (52) hat, die einer nach außen gewandten Fläche (14a) der zwei gegenüberliegenden großen, im Allgemeinen ebenflächigen äußeren Flächen (14, 16) eines ersten Fluidikmoduls (12a) in der Reihe (50) entspricht, und eine zweite nach außen gerichtete Fläche (54), die einer nach außen gewandten Fläche (16b) der zwei gegenüberliegenden großen, im Allgemeinen ebenflächigen Flächen (14, 16) eines letzten Fluidikmoduls (12b) in der Reihe (50) entspricht, wobei der Reaktor (10) ferner erste und zweite externe Fluidverbindungsstücke (72, 74) aufweist, wobei das erste externe Fluidverbindungsstück (72) fluidisch mit einem Anschluss (18a) auf der ersten nach außen gerichteten Fläche (52) verbunden ist, das zweite externe Fluidverbindungsstück (74) fluidisch mit einem Anschluss (18b) auf der zweiten nach außen gerichteten Fläche (54) verbunden ist, wobei beide ersten und zweiten externen Fluidverbindungsstücke (72, 74) eine feststehende Position haben.

## Revendications

1. Réacteur modulaire à écoulement continu (10), comprenant :
une pluralité de modules fluidiques planaires (12), chaque module (12) étant un module microfluidique comportant deux surfaces extérieures majeures opposées globalement planaires (14, 16), un ou plusieurs orifices (18) de fluide sur chaque dite surface majeure fournissant un accès fluidique à un ou plusieurs canaux de fluide à l'intérieur du module (12), les modules (12) étant organisés en une rangée espacée s'étendant horizontalement (50) qui s'étend dans la direction (D), les surfaces majeures (14, 16) des modules (12) étant orientées globalement parallèlement les unes aux autres de sorte que toute paire (20) de modules adjacents de ladite rangée (50) comporte une paire associée (22) de surfaces majeures se faisant face (24, 26), une sur chaque module ;
une pluralité de raccords rigides, ou semi-rigides, (30) de fluide, chacun étant disposé entre des première et seconde surfaces (24, 26) d'une paire (22) de surfaces majeures se faisant face des modules (12) et assurant une liaison fluidique et mécanique d'au moins un orifice (18a) de fluide de la première surface (24) de la paire de surfaces se faisant face avec au moins un autre orifice (18b) de fluide de la seconde surface (26) de la paire (22) de surfaces se faisant face ;
une structure de support s'étendant horizontalement (60) s'étendant au-dessus de la rangée s'étendant horizontalement (50) de modules (12) et dans la direction (D) ; et
un ou plusieurs dispositifs de suspension (32), chacun supportant un module de la pluralité de modules fluidiques (12) depuis la structure de support s'étendant horizontalement (60) ;
**caractérisé en ce que** les dispositifs de suspension d'au moins une pluralité du ou des dispositifs de suspension (32) comprennent tous une première liaison tournante (34) comportant un premier axe (36) disposé au-dessus du module respectif (12) et au-dessous de la structure de support s'étendant horizontalement (60), le premier axe (36) s'étendant dans une direction horizontale orthogonale à la direction (D) dans laquelle s'étend la rangée (50).

2. Réacteur (10) selon la revendication 1, dans lequel les modules de la pluralité de modules fluidiques planaires (12) comprennent des modules (12) formés d'un ou de plusieurs sous-modules (13) liés de façon permanente en un unique module plus grand (12).

3. Réacteur (10) selon la revendication 1, dans lequel les modules de la pluralité de modules fluidiques planaires (12) comprennent des modules formés d'un ou de plusieurs sous-modules (13) liés de façon réversible en un unique module plus grand (12).

4. Réacteur (10) selon l'une quelconque des revendications 1 à 3, **caractérisé en outre en ce que** les dispositifs de suspension d'au moins une pluralité des dispositifs de suspension (32) comprennent tous une seconde liaison tournante (38) comportant un second axe (40) disposé au-dessus du module respectif (12) et au-dessous de la structure de support s'étendant horizontalement (60), le second axe (40) s'étendant également dans une direction horizontale orthogonale à la direction (D) dans laquelle s'étend la rangée (50).

5. Réacteur (10) selon la revendication 4, dans lequel chacune desdites secondes liaisons tournantes (38) comprend une ou plusieurs paires (42) de broche et de crochet, de sorte que la ou les paires (42) de broche et de crochet puissent être désaccouplées facilement pour permettre un démontage de la seconde liaison tournante (38).

6. Réacteur (10) selon l'une quelconque des revendications 1 à 4, dans lequel chacune desdites premières liaisons tournantes (34) comprend une ou plusieurs paires (42) de broche et de crochet, de sorte que la ou les paires (42) de broche et de crochet puissent être désaccouplées facilement pour permettre un démontage de la première liaison tournante (34).

7. Réacteur (10) selon l'une quelconque des revendications 1 à 6, dans lequel les raccords de la pluralité de raccords rigides, ou semi-rigides, (30) de fluide sont des raccords de fluide en plastique.

8. Réacteur (10) selon l'une quelconque des revendications 1 à 7, dans lequel les raccords de la pluralité de raccords rigides, ou semi-rigides, (30) de fluide sont des raccords rigides de fluide.

9. Réacteur (10) selon l'une quelconque des revendications 1 à 8, dans lequel la rangée s'étendant horizontalement (50) comporte une première surface vers l'extérieur (52) correspondant à une surface faisant face vers l'extérieur (14a) des deux surfaces extérieures majeures opposées globalement planaires (14, 16) d'un premier module fluidique (12a) de la rangée (50), et une seconde surface vers l'extérieur (54) correspondant à une surface faisant face vers l'extérieur (16a) des deux surfaces extérieures majeures opposées globalement planaires (14, 16) d'un dernier module fluidique (12b) de la rangée (50), le réacteur (10) comprenant en outre des premier et second raccords extérieurs (72, 74) de fluide, le premier raccord extérieur (72) de fluide étant accouplé de manière fluidique à un orifice (18a) de la première surface vers l'extérieur (52), le second raccord extérieur (74) de fluide étant accouplé de manière fluidique à un orifice (18b) de la seconde surface vers l'extérieur (54), dans lequel un raccord des premier et second raccords extérieurs (72, 74) de fluide est un raccord flexible ou autrement mobile de fluide ; et l'autre raccord a une position fixe.

10. Réacteur (10) selon l'une quelconque des revendications 1 à 7, dans lequel la rangée s'étendant horizontalement (50) comporte une première surface vers l'extérieur (52) correspondant à une surface faisant face vers l'extérieur (14a) des deux surfaces extérieures majeures opposées globalement planaires (14, 16) d'un premier module fluidique (12a) de la rangée (50), et une seconde surface vers l'extérieur (54) correspondant à une surface faisant face vers l'extérieur (16b) des deux surfaces extérieures majeures opposées globalement planaires (14, 16) d'un dernier module fluidique (12b) de la rangée (50), le réacteur (10) comprenant en outre des premier et second raccords extérieurs (72, 74) de fluide, le premier raccord extérieur (72) de fluide étant accouplé de manière fluidique à un orifice (18a) de la première surface vers l'extérieur (52), le second raccord extérieur (74) de fluide étant accouplé de manière fluidique à un orifice (18b) de la seconde surface vers l'extérieur (54), dans lequel les premier et second raccords extérieurs (72, 74) de fluide ont tous les deux une position fixe.
